# EUROPEAN PATENT SPECIFICATION

(11) **EP 0 343 291 B1**
(45) Date of publication and mention of the grant of the patent: **28.07.1993**
(21) Application number: 88304707.8
(22) Date of filing: 25.05.1988
(51) Int. Cl.: B62J 9/00, B62J 11/00

(54) **Instrument carrier for motorcycles**
Instrumententräger für Motorfahrräder
Porte-instruments pour motos

(43) Date of publication of application: 29.11.1989
(73) Proprietor: Jennings, Oliver, Chicago Illinois 66028 (US)
(72) Inventor: Jennings, Oliver, Chicago Illinois 66028 (US)
(74) Representative: Brown, David Alan

(56) References cited:
- GB-A- 877 460
- US-A- 3 081 807
- US-A- 4 059 207
- US-A- 4 573 573
- US-A- 4 750 658

## Description

This invention relates to a carrier device for use in conjunction with motorcycles. More particularly, the invention relates to a carrier device for instruments, eg., for sound transmitting devices such as tape cassette players, radios and the like, for use in conjunction with the fuel tanks of motorcycles.

Motorcyclists have devised various approaches for carrying cloths and other relatively large loads on their motorcycles. Many of these devices have involved securing the load to the cycle's fuel tank with rather complex strapping, suction and locking arrangements. In many instances, the holder or carrier is completely enclosed and relatively difficult to access. Moreover, these large prior devices are often unsuitable for carrying a relatively small item, eg., a relatively sensitive instrument such as a radio, tape player, compact disc player and the like.

Sophisticated speaker systems, often attached to the handle bars, are available for motorcycles. However, there still remains a need to provide a convenient, safe place to put the sound instrument itself, eg., radio, etc., on the motorcycle.

The following US Patents were reviewed in preparing this application: 2.490.563; 2.588.671; 3.136.461; 3.944.924; 3.947.954; 4.059.207; 4.066.196; 4.359.233; 4.496.256; 4.566.617.

United States Patent Nos. 4.059.207 and 4.359.233 and British Patent No. 877.460 describe bags for attachment to the fuel tank of a motorcycle having a base and a top forming a compartment to receive articles, a resilient pad interposed between the base and the fuel tank, and straps adapted to be wrapped around the fuel tank to secure the bag to the fuel tank. However, for the reasons given above, the bags are not suitable for carrying an instrument of the kind referred to. United States Patent No. 4.573.573 describes a cover for a portable, personal audio unit made of a unitary flexible piece which is folded around the audio unit. It does not however disclose a carrier suitable for use with the fuel tank of a motorcycle.

The object of the present invention is to provide an instrument carrier for use in conjunction with a motorcycle.

The invention consists in apparatus useful as an instrument carrier in conjunction with a motorcycle having a fuel tank, the apparatus comprising:
base means including a cushion means adapted to be placed on said fuel tank when said apparatus is secured to said fuel tank,
strap means associated with said base means and capable of being wrapped around said fuel tank to secure said apparatus to said fuel tank; and
top means secured to said base means and with said base means forming a compartment in which at least one of said instruments can be placed,
characterised in that said top means has a plurality of holes which are sized and positioned to allow access to said at least one instrument while said instrument is located in said compartment.

In one embodiment, the apparatus further comprises means capable of acting in conjunction with at least one of the base means and the top means to reduce the size of the compartment, eg., as desired.

The present invention provides substantial advantages. For example, the plurality of holes present in the top means allow for relatively easy access to the instrument while the instrument is in the compartment, for example, to adjust the instrument. These holes may also be convenient for allowing wires, eg., from speaker systems, to be hooked up to the instrument in the compartment. In addition, these holes may aid in maintaining suitable environmental control, e.g., ventilation, which may be required for optimum performance of the instrument. Because the instruments to be placed in the compartment are often relatively sensitive or delicate, such instruments would benefit from being immobilized while in the compartment. Thus, in embodiments of the present system which include means to reduce the size of the compartment, the instrument is preferably held in place in the compartment regardless of the size of the instrument. In this manner, damage to the instrument caused by movement in the compartment is eliminated. Further, the system is easy to secure to and remove from the motorcycle fuel tank. In short, the present system provides a very effective way to safely carry relatively sensitive and sophisticated instruments on motorcycles.

The present apparatus preferably further comprises stabilizing means secured to the base means and adapted to be removably fastened around a component of the motorcycle other than the fuel tank to stabilize the position of the apparatus on the fuel tank. For example, the stabilizing means may comprise a pair of elongated cords or wires which extend outwardly from the base and which can be tied to the front frame of the motorcycle. When in place these cords act to help maintain the base means on top of the fuel tank.

The top means is preferably structured to be at least partially removable from the base means to allow the instrument to be placed in the compartment. Preferably, the top means is substantially permanently affixed to the base means. The top means preferably includes a top portion constructed of netting to provide the plurality of holes. This top portion preferably acts as the ceiling or top of the compartment. Such netting has been found to be sufficiently durable to form part of the compartment for the instrument. Also, the netting is preferably flexible which helps to provide that the size of compartment can be varied, as desired.

The base means preferably includes an end wall which acts as the floor or bottom of the compartment. Also, the base means preferably includes at least one sidewall, more preferably a plurality of sidewalls, acting to at least partially define the compartment. In this embodiment, the top means preferably includes at least one sidewall, preferably a plurality of
sidewalls, adapted to be removably secured to the sidewall or sidewalls of the base means. More preferably, the sidewall or sidewalls of the base means carried loops or hooks and the sidewall or sidewalls of the top means carries hooks and loops, adapted to be removably fastened to the loops or hooks carried by the sidewall or sidewalls of the base means. Still more preferably, the base means and the top means each include three such removably securable sidewalls. Examples of such hook/loop fasteners are Velcro® fasteners.

The presently useful strap means is preferably a single strap. In one embodiment, the strap means is removably fitted between the floor or bottom of the compartment and the cushion means, e.g., through one or two loops extending downwardly from the opposite side of the bottom of the compartment. Thus, in this embodiment, the strap means is not permanently affixed to the base means. Preferably, the strap means, more preferably the single strap, includes a first segment carrying hooks and a second segment carrying loops such that such hooks and loops are engagable when the strap means is wrapped around the fuel tank.

As noted above, in one embodiment, the present instrument carrier includes means capable of acting in conjunction with at least one of the base means and the top means to change, e.g., reduce, the size of the compartment, e.g., to a size more effective in holding the instrument placed in the compartment. Preferably, this means comprises a strip capable of being removably attached to at least one of the base and the top means. More preferably, this strip is removably attached to the base means and/or the top means by at least one hook and loop combination. When such means is included, it is preferred that the compartment be flexibly structured to allow for the desired change, e.g., reduction, in size.

The compartment itself may be of any suitable size and shape. Because the instruments often desired to be carried in the present carrier are relatively small, the interior volume of the compartment (prior to being reduced by the action of the above-noted means) is preferably less than about 300 cubic inches (5 litres), more preferably less than about 150 cubic inches (2,5 litres).

These and other aspects and advantages of the present invention will become apparent in the following detailed description and claims, particularly when considered in conjunction with the accompanying drawings in which like parts bear like reference numerals. In the drawings:
Figure 1 is a top side view, in perspective showing an embodiment of the present instrument carrier in use on a motorcycle.
Figure 2 is a top side view, in perspective of certain components of the instrument carrier shown in Figure 1 opened to allow placement of an instrument into the carrier.
Figure 3 is a top plan view of the instrument carrier shown in Figure 1.

Referring now to the drawings, an instrument carrier shown generally as 10, includes a resilient foam cushion 12, a base 14, a top 16, a securement strap 18, a strip 20 and two stabilizing cords 22 and 24.

Base 14 is adhesively secured to the top surface of cushion 12 at both ends. Strap 18 is fitted into two loops (not shown) on the underside of base 14 and is thus situated between cushion 12 and base 14. Strap 18 is substantially freely slidable in these two loops so that the relative lengths of strap 18 extending on either side of base 14 can be adjusted, as desired. Strap 18 also includes a hook strip 26 secured near the end of one side of strap 18 and a corresponding loop strip 28 secured to the other side of strap 18.

Strap 18 is employed to secure instrument carrier 10 to the fuel tank 30 of motorcycle 32. Thus, with instrument carrier 10 placed on top of fuel tank 30 and cushion 12 abutting motorcycle seat 34, strap 18 is placed around fuel tank 30 and hook strip 26 and loop strip 28 are brought together to fasten or lock or secure instrument carrier 10 in place on fuel tank 30. Instrument carrier 10 can easily be removed from fuel tank 30 simply by disengaging hook strip 26 from loop strip 28.

The top of base 14 includes a small hole 36 through base 14 which acts to secure stabilizing cords 22 and 24 to base 14. With strap 18 in place around fuel tank 30, stabilizing cords 22 and 24 are tied around a part of the front frame of motorcycle 32 which is stationary relative to fuel tank 30. With stabilizing cords 22 and 24 tied as described above, the position of instrument carrier on top of fuel tank 30 is more stabilized. In other words, the tied stabilizing cords 22 and 24 act to reduce the possibility that instrument carrier 10 will move from the top of fuel tank 30.

Base 14 includes three sidewalls 36, 38 and 40 which extend upwardly relative to cushion 12, and a floor 42. The outside surface of each of the three sidewalls 36, 38 and 40 are substantially covered with hook elements 44.

Top 16 includes netting 46 which is adhesively secured to base 14 and to three sidewalls 48, 50 and 52. Loop elements 54 substantially cover the inside surface of each of the three sidewalls 48, 50 and 52. Sidewalls 48, 50 and 52 are structured and sized so that the inside surfaces of sidewalls 48, 50 and 52 can be placed on and secured to (by the engagement of hook elements 44 and loop elements 54) the outside surfaces of sidewall 36, 38 and 40, respectively. With sidewalls 48, 50 and 52 in place on sidewalls 36, 38 and 40, respectively, as described above, base 14 and top 16 define a compartment into which an instrument, e.g., radio, tape player, compact disc
player and the like, can be placed. The various components of base 14 and top 16 are constructed of relatively flexible material so that the size and/or shape of the compartment can be reduced and/or adjusted as desired to suit a particular application involved.

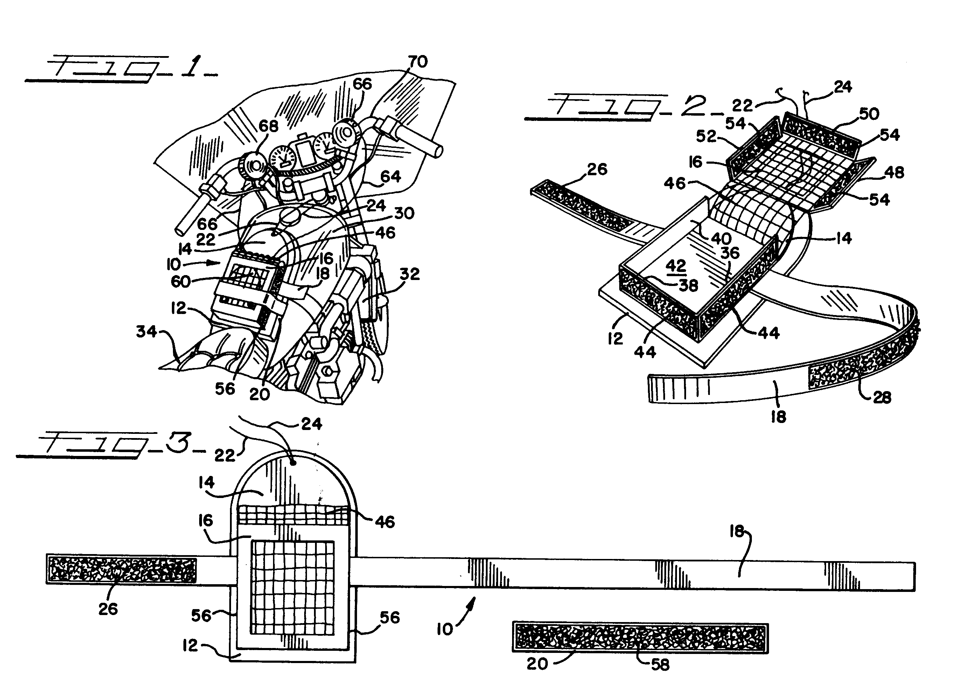

The outside surfaces of sidewalls 48 and 52 are substantially covered by loop elements 56 which are adapted to engage the hoop element 58 which substantially covers one side of strip 20. The size of the instrument compartment can be reduced, as desired, by placing strip 20 over top 16 (as shown in Figure 1) and securing hoop element 58 to the loop elements 56 on both sidewalls 48 and 52.

The functioning of instrument carrier 10 is illustrated as follows. Instrument carrier is placed on top of fuel tank 30 as described above. Sidewalls 48, 50 and 52 of top 16 are disengaged from sidewalls 36, 38 and 40. A compact disc player 60 is placed on floor 42. Two wires 62 and 64 attached to player 60 are run through netting 46 and are attached to speakers 66 and 68, respectively, which are carried by the handle bars 70 of motorcycle 32. Sidewalls 48, 50 and 52 are then secured to sidewalls 36, 38 and 40, respectively. Strip 20 is placed across top 16 and attached to loop elements 56 thereby reducing the size of the compartment and effectively immobilizing player 60 in the compartment. Player 60 can now be safely played while motorcycle 32 is in motion to provide entertainment/information. The volume and other settings of player 60 can be easily adjusted through netting 46 without disturbing instrument carrier 10. When leaving motorcycle 32, instrument carrier 10 can be easily and quickly removed from fuel tank 30, thereby avoiding theft and/or vandalism of the instrument in the compartment.

The present instrument carrier is relatively inexpensive to manufacture and easy to use. Substantial flexibility is built into the present system to provide for safe and effective carrying of relatively sensitive instruments.

While the invention has been described with respect to various specific examples and embodiments, it is to be understood that the invention is not limited thereto and that it can be variously practiced within the scope of the following claims.

## Claims

1. An apparatus useful as an instrument carrier in conjunction with a motorcycle having a fuel tank (30), the apparatus comprising:
base means (12) including a cushion means (14) adapted to be placed on said fuel tank (30) when said apparatus (10) is secured to said fuel tank (30),
strap means (18) associated with said base means (12) and capable of being wrapped around said fuel tank (30) to secure said apparatus (10) to said fuel tank (30); and
top means (16) secured to said base means (12) and with said base means (12) forming a compartment in which at least one of said instruments (60) can be placed,
characterised in that said top means (16) has a plurality of holes which are sized and positioned to allow access to said at least one instrument (60) while said instrument is located in said compartment.

2. The apparatus of Claim 1 which further comprises separate strap means (20) acting in conjunction with at least one of said base means (12) and said top means (16) to reduce the size of said compartment so that said at least one instrument (60) is held securely in place in said compartment.

3. The apparatus of Claim 1 or 2 which further comprises stabilizing means (22,24) secured to said base means (12) and adapted to be removably fastened around a component of said motorcycle (32) other than said fuel tank (30) to stabilize the position of said apparatus on said fuel tank.

4. The apparatus of Claim 1, 2 or 3 wherein said top means (16) is structured to be at least partially removable from said base means (12) to allow said instrument (60) to be placed in said compartment.

5. The apparatus of any preceding claim wherein said base means (12) includes at least one sidewall (36,38,40) acting to at least partially define said compartment.

6. The apparatus of Claim 5 wherein said top means (16) includes at least one sidewall (48,50,52) adapted to be removably secured to said sidewall (36,38,40) of said base means (12).

7. The apparatus of Claim 6 wherein said sidewall (36,38,40) of said base means (12) carries loops or hooks (44) and said sidewall (48,50,52) of said top means (16) carries loops (54) or hooks adapted to be removably fastened to the loops or hooks (44) carried by said sidewall (36,38,40) of said base means (12).

8. The apparatus of any preceding claim wherein said top means (16) is substantially permanently affixed to said base means (12) and said top means (16) includes a top portion (46) constructed of netting to provide said plurality of holes.

9. The apparatus of any preceding claim wherein said cushion means includes a resilient foam cushion (14) and said strap means (18) includes a first segment (26) carrying hooks and a second segment (28) carrying loops such that said hooks and loops are engageable when said strap means (18) is wrapped around said fuel tank (30).

## Patentansprüche

1. Vorrichtung, die als Geräteträger in Verbindung mit einem Motorrad verwendet werden kann, das einen Kraftstofftank (30) hat, wobei die Vorrichtung folgende Merkmale aufweist:
ein Basiselement (12) einschließlich eines Kissenelementes (14), die so ausgelegt sind, daß sie auf besagten Kraftstofftank (30) angeordnet werden können, wenn die besagte Vorrichtung (10) an besagtem Kraftstofftank (30) befestigt ist,
eine Gurtvorrichtung (18) in Verbindung mit besagtem Basiselement (12), die um besagten Kraftstofftank (30) geschlungen werden kann, um besagte Vorrichtung (10) an besagtem Kraftstofftank (30) zu befestigen; und
ein Aufsatzelement (16), das an besagtem Basiselement (12) befestigt ist und das zusammen mit besagtem Basiselement (12) ein Abteil bildet, in dem wenigstens eines der besagten Geräte (60) verstaut werden kann,
dadurch **gekennzeichnet,** daß das besagte Aufsatzelement (16) mehrere Löcher aufweist, die bemessen und angeordnet sind, um einen Zugang zu besagtem wenigstens einem Gerät (60) zu ermöglichen, während sich das besagte Gerät in dem besagten Abteil befindet.

2. Vorrichtung nach Anspruch 1, die zusätzlich eine gesonderte Gurtvorrichtung (20) aufweist, welche in Verbindung mit wenigstens einem der besagten Basiselemente (12) und besagtem Aufsatz (16) dazu dient, die Größe des besagten Abteiles zu verringern, so daß das besagte wenigstens eine Gerät (60) fest auf seinem Platz in besagtem Abteil gehalten wird.

3. Vorrichtung nach Anspruch 1 oder Anspruch 2, die zusätzlich eine Stabilisierungsvorrichtung (22, 24) aufweist, die an besagtem Basiselement (12) befestigt ist und dafür ausgelegt ist, um an einer anderen Komponente des besagten Motorrades (32) als dem besagten Kraftstofftank (30) abnehmbar befestigt zu werden, um die Lage der besagten Vorrichtung auf besagtem Kraftstofftank zu stabilisieren.

4. Vorrichtung nach Anspruch 1, 2 oder 3, wobei besagtes Aufsatzelement (16) so ausgelegt ist, daß es wenigstens teilweise von besagten Basiselement (12) abgenommen werden kann, um zu ermöglichen, daß das besagte Gerät (60) in besagtes Abteil eingelegt werden kann.

5. Vorrichtung nach einem der vorangehenden Ansprüche, wobei das besagte Basiselement (12) wenigstens eine Seitenwand (36, 38, 40) beinhaltet, die dazu dient, wenigstens teilweise das besagte Abteil zu begrenzen.

6. Vorrichtung nach Anspruch 5, wobei besagtes Aufsatzelement (16) wenigstens eine Seitenwand (48, 50, 52) beinhaltet, die so ausgelegt ist, daß sie abnehmbar an besagter Seitenwand (36, 38, 40) des besagten Basiselementes (12) befestigt werden kann.

7. Vorrichtung nach Anspruch 6, wobei die Seitenwand (36, 38, 40) des besagten Basiselements (12) Schlaufen oder Haken (44) trägt und besagte Seitenwand (48, 50, 52) des besagten Aufsatzelementes (16) Schlaufen (54) oder Haken trägt, die so ausgelegt sind, daß sie abnehmbar an den Schlaufen oder Haken (44), die von der Seitenwand (36, 38, 40) des besagten Basiselementes (12) getragen werden, befestigt werden können.

8. Vorrichtung nach einem der vorangehenden Ansprüche, wobei besagtes Aufsatzelement (16) im wesentlichen permanent an besagtem Basiselement (12) angebracht ist und besagtes Aufsatzelement (16) ein Oberteil (46) enthält, das aus einem Netzwerk gefertigt ist, um so die besagte Mehrzahl an Löchern aufzuweisen.

9. Vorrichtung nach einem der vorangehenden Ansprüche, wobei das besagte Kissenelement ein elastisches (nachgiebiges) Schaumkissen (14) beinhaltet und besagte Gurtvorrichtung (18) ein erstes Segment (26), das Haken trägt, und ein zweites Segment (28), das Schlaufen trägt, aufweist, so daß besagte Haken und Schlaufen ineinander greifen können, wenn die besagte Gurtvorrichtung (18) um den besagten Kraftstofftank (30) geschlungen wird.

## Revendications

1. Appareil utilisable comme porte-instruments en association avec une motocyclette ayant un réservoir de carburant (30), l'appareil comprenant :
une base (12) comportant un coussin (14), prévue pour être placée sur ledit réservoir de carburant (30) lorsque ledit appareil (10) est fixé audit réservoir de carburant (30),
une sangle (18) associée à ladite base (12) et pouvant ceinturer ledit réservoir de carburant (30) pour fixer ledit appareil (10) audit réservoir de carburant (30) ; et
un couvercle (16) fixé à ladite base (12) et définissant avec ladite base (12) un compartiment dans lequel on peut placer au moins un desdits instruments (60),
caractérisé en ce que ledit couvercle (16) comporte une pluralité de trous qui sont dimensionnés et positionnés pour permettre l'accès audit au moins un instrument (60) lorsque ledit instrument est placé dans ledit compartiment.

2. Appareil suivant la revendication 1, qui comprend en outre une sangle séparée (20) agissant en combinaison avec au moins un de ladite base (12) et du dit couvercle (16) pour réduire la dimension dudit compartiment de sorte que ledit au moins un instrument (60) est fermement tenu en place dans ledit compartiment.

3. Appareil suivant la revendication 1 ou 2, qui comprend en outre des moyens de stabilisation (22,24) fixés à ladite base (12) et pouvant être attachés de façon séparable autour d'un composant de ladite motocyclette (32) autre que ledit réservoir de carburant (30) afin de stabiliser la position dudit appareil sur ledit réservoir de carburant.

4. Appareil suivant la revendication 1,2 ou 3, dans lequel ledit couvercle (16) est structuré de façon à être au moins partiellement séparable de ladite base (12) pour permettre de placer ledit instrument (60) dans ledit compartiment.

5. Appareil suivant une quelconque des revendications précédentes, dans lequel ladite base (12) comporte au moins une paroi latérale (36,38,40) servant à définir au moins partiellement ledit compartiment.

6. Appareil suivant la revendication 5, dans lequel ledit couvercle (16) comporte au moins une paroi latérale (48,50,52) prévue pour être fixée de façon séparable à ladite paroi latérale (36,38,40) de ladite base (12).

7. Appareil suivant la revendication 6, dans lequel ladite paroi latérale (36,38 ,40) de ladite base (12) porte des boucles ou des crochets (44) et ladite paroi latérale (48,50,52) dudit couvercle (16) porte des boucles (54) ou des crochets prévus pour se fixer de façon séparable aux boucles ou crochets (44) portés par ladite paroi latérale (36,38,40) de ladite base (12).

8. Appareil suivant une quelconque des revendications précédentes, dans lequel ledit couvercle (16) est fixé de façon sensiblement permanente à ladite base (12) et ledit couvercle (16) comprend une partie supérieure (46) construite en grillage pour définir ladite pluralité de trous.

9. Appareil suivant une quelconque des revendications précédentes, dans lequel ledit coussin comprend un coussin en mousse élastique (14) et ladite sangle (18) comprend un premier segment (26) portant des crochets et un deuxième segment (28) portant des boucles, de sorte que lesdits crochets et lesdites boucles peuvent s'accoupler lorsque ladite sangle (18) est enroulée autour du dit réservoir de carburant (30).
